# EUROPEAN PATENT APPLICATION

(11) **EP 2 015 239 A2**
(43) Date of publication of application: **14.01.2009**
(21) Application number: 08011945.6
(22) Date of filing: 02.07.2008
(51) Int. Cl.: G06Q 10/00

(54) **Device, method, program, and storage medium of work instruction delivery**

(30) Priority: 02.07.2007 JP 2007173897
(71) Applicant: Hitachi Ltd., Chiyoda-ku Tokyo 100-8280 (JP)
(72) Inventor: Seya, Nobuhisa, Chiyoda-ku Tokyo 100-8220 (JP); Hosomi, Shoichiro, Chiyoda-ku Tokyo 100-8220 (JP); Iida, Kiichiro, Chiyoda-ku Tokyo 100-8220 (JP)
(74) Representative: Strehl Schübel-Hopf & Partner

(57) **Abstract**

A control unit 200 revises a work order skeleton in a work order skeleton holding section 102 and work procedure explanatory information in a work procedure explanatory information holding section 103 based on revision information, if the revision information is held in the work order skeleton holding section 102 or the work procedure explanatory information holding section 103. The control unit 200 then makes a creation unit 300 create revised electronic work instruction contents and send the contents to a display/voice guidance unit 400. The display/voice guidance unit 400 displays an image or produces a voice guidance based on the electronic work instruction contents.

## Description

### BACKGROUND OF THE INVENTION

### 1. Field of the Invention

The present invention relates to a device, a method, a program, and a storage medium, of work instruction delivery for displaying and explaining an order of works and procedures of the works according to the order and for delivering work instructions.

### 2. Description of the Related Art

Explanation of an order of works and procedures of the works according to the order is indispensable for assembly of machine parts or installment of a plant. According to related art, a system of work instruction delivery includes: a 3D CAD system for designing a product using a design model creation means and adding information on processes of producing the product to a created design model of the product; and a CAD data viewer system for displaying information on machining, inspection, and assembly. The 3D CAD system includes: a process model creation means for creating a process model including an order of machining, based on the design model created by the design model creation means; and a machining model creation means for creating a machining model including a machining instruction in each process. A set of information on a machining process, a machining instruction, an inspection instruction, and an assembly instruction is added to the 3D CAD model, on which a set of the information is displayed (see, for example, Japanese Published Patent Application No.2004-240659 and Japanese Published Patent Application No.2002-91533).

However, the system of work instruction delivery according to related art has a disadvantage that the system cannot solve a possible problem in information on a work instruction which is found when a work is actually done based on the work instruction.

The present invention has been made in an attempt to provide a device, a method, a program, and a storage medium, of work instruction delivery which can solve a possible problem in information on a work instruction found when a work is actually done based on the work instruction.

### SUMMARY OF THE INVENTION

A device of work instruction delivery according to the present invention for displaying and explaining an order of works and procedures of the works according to the order and for delivering work instructions includes:
a work order skeleton holding means (which may also be specifically referred to as a work order skeleton holding section 102) for holding a work order skeleton representing an order of works;
a work procedure explanatory information holding means (which may also be specifically referred to as a work procedure explanatory information holding section 103) for holding work procedure explanatory information representing work procedures according to the order of works;
an electronic work instruction contents creating means (which may also be specifically referred to as a creation unit 300) for creating and holding electronic work instruction contents based on the work order skeleton held in the work order skeleton holding means and the work procedure explanatory information held in the work procedure explanatory information holding means;
a display means (which may also be specifically referred to as a display/voice guidance unit 400) for reading out the electronic work instruction contents from the electronic work instruction contents creation means and display an image based on the contents;
a work state image taking means (which may also be specifically referred to as an image taking section 502) for taking an image of a state of an actual work performed according to the order of works and creating work state image data from the taken image;
a comparison display means (for example, an actual operation monitor comparison section 501 and a monitor 503) for displaying for comparison between the electronic work instruction contents and the work state image data; a revision information input means (which may also be specifically referred to as an operational input section 101) for inputting revision information based on the electronic work instruction contents and the work state image data displayed on the comparison display means;
a revision information holding means for holding revision information inputted from the revision information input means into the work order skeleton holding means or the work procedure explanatory information holding means (which may also be specifically referred to as the work order skeleton holding section 102 and the work procedure explanatory information holding section 103, respectively);
a revised electronic work instruction contents creating means (which may also be specifically referred to as the creation unit 300) for revising the work order skeleton in the work order skeleton holding means or the work procedure explanatory information in the work procedure explanatory information holding means based on the revision information held in the work order skeleton holding means or the work procedure explanatory information holding means, and for creating and holding revised electronic work instruction contents; and
a revision display means (which may also be specifically referred to as a display/voice guidance unit 400) for displaying the revised electronic work instruction contents from the revised electronic work instruction contents creating means.

Other features and advantages of the present invention will become more apparent from the following detailed description of the invention, when taken in conjunction with the accompanying exemplary drawings.

### BRIEF DESCRIPTION OF THE DRAWINGS

FIG. 1 is a block diagram showing functional configuration of a device of work instruction delivery.
FIG. 2 is a flowchart showing main processings performed by the device of work instruction delivery.
FIG. 3 is an explanatory view showing an example of a display screen of a display section for delivering an electronic work instruction.
FIG. 4 is an explanatory top view showing an example of configuration and arrangement in an assembling work.
FIG. 5 is an explanatory elevation view showing an example of configuration and arrangement in the assembling work.
FIG. 6 is an explanatory top view showing an example of positioning in the assembling work.
FIG. 7 is an explanatory elevation view showing an example of positioning in the assembling work.
FIG. 8A to FIG. 8D are explanatory views of a fixing work of coupling sections of a pair of work target objects.
FIG. 9 is a diagram showing information for an instruction of combining coupling components in the fixing work in which respective coupled sections of a pair of work target objects are fixed in electronic work instruction contents.
FIG. 10 is a diagram showing information for an instruction of coupling components in the fixing work in which respective coupled sections of the pair of work target objects are fixed in revised electronic work instruction contents.

### DETAILED DESCRIPTION OF THE EXEMPLARY EMBODIMENT

With reference to attached drawings, an embodiment of the present invention is described in detail below.

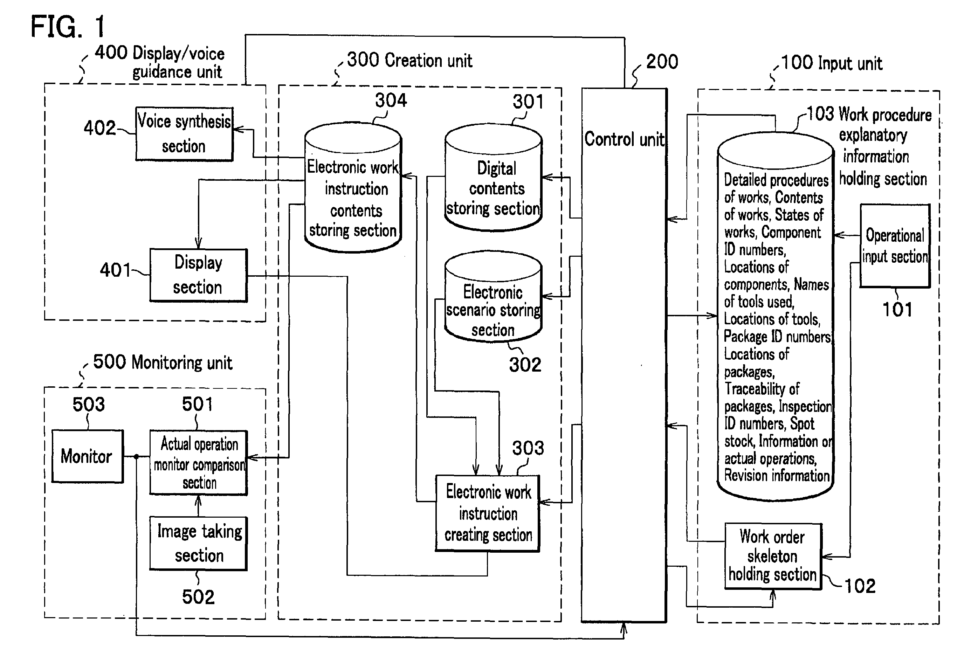

As shown in FIG. 1, a device of work instruction delivery includes an input unit 100, a control unit 200, a creation unit 300, a display/voice guidance unit 400, and a monitoring unit 500.

The input unit 100 includes an operational input section 101, a work order skeleton holding section 102, and a work procedure explanatory information holding section 103. The operational input section 101 is connected to both the work order skeleton holding section 102 and the work procedure explanatory information holding section 103. The input unit 100 may be embodied by an information processing unit such as a server. The operational input section 101 may be embodied by a keyboard provided with various operation keys, a numeric keypad, or the like, and a display monitor for displaying operational information inputted from the keyboard. The work order skeleton holding section 102 and the work procedure explanatory information holding section 103 may be each embodied by a storage.

An operator inputs data through the operational input section 101, to thereby make the work order skeleton holding section 102 and the work procedure explanatory information holding section 103 hold a previously-generated work order skeleton and work procedure explanatory information, respectively.

The work order skeleton is information representing an order of works. The work procedure explanatory information contains detailed procedures of works, contents of works, states of works, component ID numbers, locations of components, names of tools used, locations of tools, package ID numbers, locations of packages, traceability of packages, inspection ID numbers, information on spot stock, information on actual operations, revision information, and the like. Expressed in another way, the work procedure explanatory information includes 3D CAD data, video data, image data, photographic data, or document data. Such information other than the revision information is created in advance and is held in the work procedure explanatory information holding section 103.

The operational input section 101 is a section into which various operational information and revision information are inputted. The operational input section 101 may also be referred to as an operational input means. The work order skeleton holding section 102 holds a work order skeleton which is information representing an order of works. The work order skeleton holding section 102 may also be referred to as a work order skeleton holding means. The work procedure explanatory information holding section 103 holds work procedure explanatory information for explaining work procedures according to an order of works. The work procedure explanatory information holding section 103 may also be referred to as a work procedure explanatory information holding means.

The work order skeleton holding section 102 and the work procedure explanatory information holding section 103 are connected to the control unit 200. The control unit 200 is connected to the input unit 100, the creation unit 300, the display/voice guidance unit 400, and the monitoring unit 500. The control unit 200 may be embodied by an information processing unit such as a personal computer and a server.

The creation unit 300 includes a digital contents storing section 301, an electronic scenario storing section 302, an electronic work instruction creating section 303, and an electronic work instruction contents storing section 304. The digital contents storing section 301, the electronic scenario storing section 302, the electronic work instruction creating section 303 are each connected to the control unit 200. The digital contents storing section 301 and the electronic scenario storing section 302 are each connected to the electronic work instruction creating section 303. The electronic work instruction creating section 303 is connected to the electronic work instruction contents storing section 304. The creation unit 300 may be embodied by an information processing unit such as a server.

The control unit 200 receives the work order skeleton from the work order skeleton holding section 102, creates an electronic scenario which is a scenario of the order of works, and stores the electronic scenario in the electronic scenario storing section 302. The control unit 200 receives the work procedure explanatory information from the work procedure explanatory information holding section 103, generates digital contents based on the information, and stores the digital contents in the digital contents storing section 301.

The electronic work instruction creating section 303 creates electronic work instruction contents as work instruction information, based on the digital contents obtained from the digital contents storing section 301 and the electronic scenario obtained from the electronic scenario storing section 302. The electronic work instruction creating section 303 then stores the electronic work instruction contents in the electronic work instruction contents storing section 304. The digital contents storing section 301, the electronic scenario storing section 302, and the electronic work instruction contents storing section 304 may be each embodied by a storage. The control unit 200 and the creation unit 300 may also be collectively referred to as an electronic work instruction contents creating means which creates electronic work instruction contents based on the work order skeleton in the work order skeleton holding section 102 and the work procedure explanatory information in the work procedure explanatory information holding section 103, and holds the created electronic work instruction contents.

The display/voice guidance unit 400 includes a display section 401 and a voice synthesis section 402. The display section 401 and the voice synthesis section 402 are each connected to the electronic work instruction contents storing section 304. The display section 401 receives the electronic work instruction contents in the electronic work instruction contents storing section 304 and displays the contents. The display section 401 is also connected to the electronic work instruction creating section 303 and has a function of exaggeration display with which a specific portion of work contents in the electronic work instruction contents is displayed in a magnified image. The exaggeration display allows any portion of the electronic work instruction contents to be enlarged which is not necessarily proportionate to actual scale. The display/voice guidance unit 400 may be embodied by an information processing unit such as a personal computer. The display section 401 of the display/voice guidance unit 400 may also be referred to as a display means which reads out and displays the electronic work instruction contents from the electronic work instruction contents storing section 304 of the creation unit 300. The display section 401 may be embodied by a liquid crystal display unit.

The voice synthesis section 402 delivers a work instruction by producing a voice. Such a vocal work instruction is synthesized based on voice information which is included, if any, in the electronic work instruction contents in the electronic work instruction contents storing section 304. The voice synthesis section 402 produces voice in a language which is understandable to an operator. The voice synthesis section 402 may be embodied by a voice synthesis unit for synthesizing voice based on electronic information. The voice synthesis section 402 may deliver work contents in a voice in any language by use of multilingual voice recording or the like.

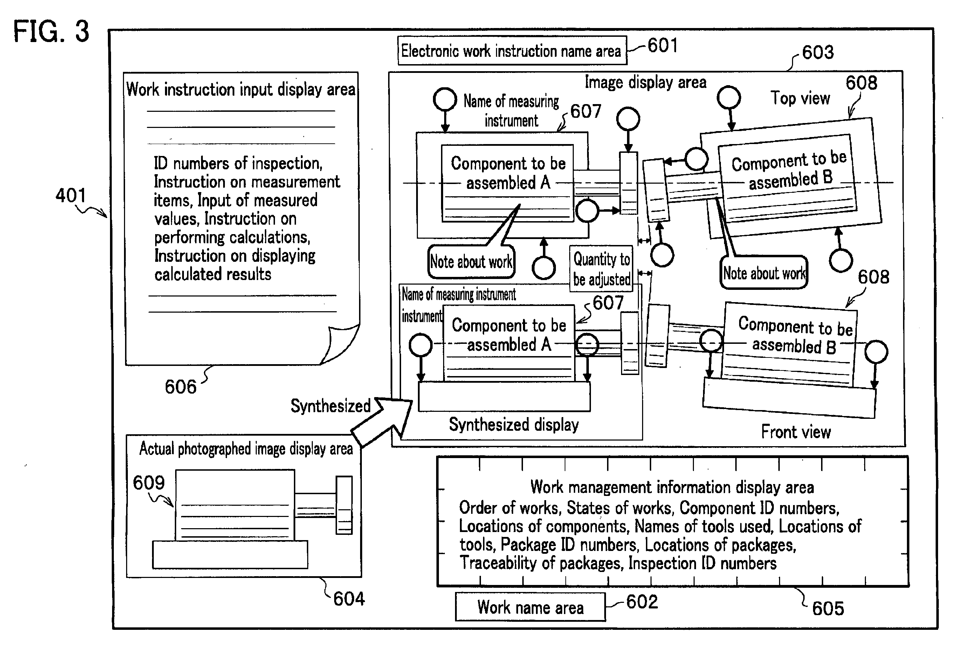

The operator can perform a work while checking a display screen of the display section 401 (see FIG. 3) on which an electronic work instruction representing detailed procedures of the work based on the order of works is delivered, and a voice guidance from the voice synthesis section 402.

The monitoring unit 500 includes an actual operation monitor comparison section 501, an image taking section 502, and a monitor 503. The actual operation monitor comparison section 501 is connected to the electronic work instruction contents storing section 304. The image taking section 502 is connected to the actual operation monitor comparison section 501. The actual operation monitor comparison section 501 is also connected to the monitor 503 and the control unit 200. The actual operation monitor comparison section 501 may be embodied by an information synthesizing unit for synthesizing plurality pieces of information to generate synthesized information. The monitoring unit may be embodied by an information processing unit such as a personal computer. The image taking section 502 may be embodied by a camera for taking a video picture of a work to generate video information, such as a video camera. The monitor 503 may be embodied by a liquid crystal display unit.

The image taking section 502 takes an image of a state of an actual work performed according to an order of works, generates work state image data, and sends the data to the actual operation monitor comparison section 501. The image taking section 502 may also be referred to as a work state image taking means. The actual operation monitor comparison section 501 also receives the electronic work instruction contents from the electronic work instruction contents storing section 304.

The actual operation monitor comparison section 501 compares the electronic work instruction contents to the work state image data, generates data for comparison, and transfers the data to the monitor 503. The monitor 503 displays the data transferred from the actual operation monitor comparison section 501 for comparing the electronic work instruction contents to the work state image data. The actual operation monitor comparison section 501 and the monitor 503 may be collectively referred to as a comparison display means. The monitor 503 is herein disposed near the operational input section 101. However, the monitor 503 may be disposed away from the operational input section 101.

An operator observes an image of the data for comparison displayed on the monitor 503. If the operator determines that the electronic work instruction contents should be revised, the operator inputs revision information into the operational input section 101, based on the electronic work instruction contents and the work state image data. The revision information is held in the work order skeleton holding section 102 or the work procedure explanatory information holding section 103. In this operation, the operational input section 101 may also be referred to as a revised information input means, and the work order skeleton holding section 102 and the work procedure explanatory information holding section 103 may also be collectively referred to as a revised information holding means.

Before delivering a work instruction, if the control unit 200 determines that revision information is held in the work order skeleton holding section 102 or the work procedure explanatory information holding section 103, the control unit 200 revises the work order skeleton in the work order skeleton holding section 102 or the work procedure explanatory information in the work procedure explanatory information holding section 103, based on the revision information. Then the control unit 200 makes the creation unit 300 create revised electronic work instruction contents, and instructs the display/voice guidance unit 400 to display an image or produce a voice guidance based on the revised electronic work instruction contents. Then the display/voice guidance unit 400 displays the image on the display section 401 or produces the voice guidance from the voice synthesis section 402.

In this operation, the control unit 200 and the creation unit 300 may be collectively referred to as a revised electronic work instruction contents creation means. The display section 401 may be referred to as a revision display means.

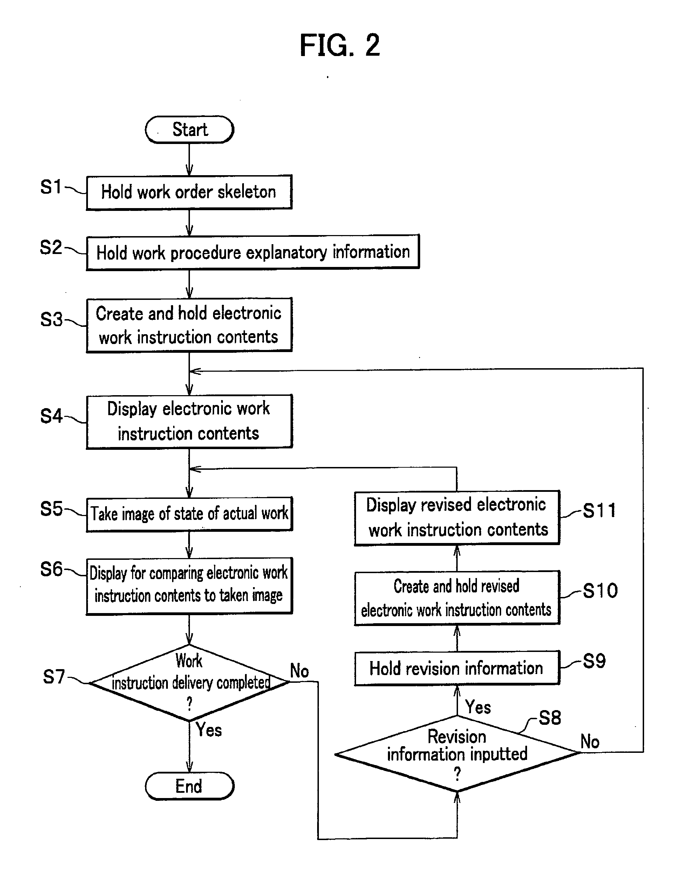

Next are described main processings performed by the device of work instruction delivery according to the embodiment of the present invention, with reference to FIG. 1 and FIG. 2.

In FIG. 2, the work order skeleton holding section 102 holds the work order skeleton representing an order of works (step S1). In this operation, an operator operates the operational input section 101 to make a previously-prepared work order skeleton hold in the work order skeleton holding section 102.

The work procedure explanatory information holding section 103 holds the work procedure explanatory information for explaining work procedures according to the order of works (step S2). In this step, the operator operates the operational input section 101 to make the work procedure explanatory information holding section 103 hold previously-prepared work procedure explanatory information.

The control unit 200 and the creation unit 300 create and hold the electronic work instruction contents based on the work order skeleton and the work procedure explanatory information (step S3). Then the display section 401 of the display/voice guidance unit 400 reads out and displays the electronic work instruction contents from the creation unit 300 (step S4).

The image taking section 502 of the monitoring unit 500 takes an image of a state of an actual work performed according to the order of works and generates the work state image data (step S5). Then the actual operation monitor comparison section 501 and the monitor 503 compare and display the electronic work instruction contents and the work state image data (step S6).

The control unit 200 determines whether or not a work instruction delivery has already been completed (step S7). If the work instruction delivery has not yet been completed in step S7 (No in step S7), the control unit 200 determines whether or not revision information has been inputted (step S8). Before the determination, an operator looks at an image on the monitor 503, and, if the electronic work instruction contents are found to require revision, the operator inputs revision information into the operational input section 101 based on the electronic work instruction contents and the work state image data. In step S7, if the work instruction delivery has already been completed (Yes in step S7), the process terminates.

In step S8, if the revision information has not yet been inputted (No in step S8), the process returns to step S4. On the other hand, if the revision information has already been inputted (Yes in step S8), the work order skeleton holding section 102 or the work procedure explanatory information holding section 103 holds the revision information (step S9) .

The control unit 200 and the creation unit 300 revise the work order skeleton in the work order skeleton holding section 102 or the work procedure explanatory information in the work procedure explanatory information holding section 103, based on the revision information, and create and hold the revised electronic work instruction contents (step S10). The display section 401 of the display/voice guidance unit 400 reads out the revised electronic work instruction contents from the creation unit 300 and displays the contents (step S11). Then the process returns to step S5.

The embodiment of the present invention may include a feedback means. The feedback means monitors results of works and feedbacks an assembling state of a component, progress of works, positional information of components and tools, and information on a change in an general shape of assembled components over the process, as 3D CAD data, video data, image data, photographic data, document data, or a device signal. Further, the embodiment of the present invention may include a calculating means. The calculating means calculates an optimum arrangement order of components and a displacement quantity for assembling the components, based on a weight of the components and coordinates of positions of the assembled components, which can be obtained by the feedback means.

The present invention is also directed to a method, a program of work instruction delivery for executing the processings, and a storage medium thereof for storing the program.

Next are described specific examples of the electronic work instruction contents according to the embodiment of the present invention with reference to related drawings. One example is the electronic work instruction contents in a work of aligning a shaft of a turbine for its installation. Alignment is an important work in installing a machine. A well-aligned machine is less likely to break down or to be subjected to a trouble such as generation of excessive vibration, and wearing of a coupling.

In FIG. 3, a display screen of the display section 401 includes an electronic work instruction name area 601, a work name area 602, an image display area 603, an actual photographed image display area 604, a work management information display area 605, and a work instruction input display area 606.

The electronic work instruction name area 601 displays an electronic work instruction name. The work name area 602 displays a work name. The image display area 603 displays a top view and a front view of a work target object. In FIG. 3, for example, the image display area 603 displays a top view and a front view of a work target object image 607 and another work target object image 608. The work target object images 607, 608 are herein components to be assembled A,B, respectively. The image display area 603 also displays a name of a measuring instrument, information on a position where measurement is made, a note about a work, and a quantity to be adjusted of a work target object. The actual photographed image display area 604 displays an actual photographed image 609 of a work target object. In FIG. 3, the actual photographed image 609 is synthesized to create the work target object images 607,608 displayed on the image display area 603.

The work management information display area 605 displays an order of works, states of works, component ID numbers, locations of components, names of tools used, locations of tools, package ID numbers, locations of packages, traceability of packages, inspection ID numbers, and the like. The work instruction input display area 606 displays ID numbers of inspection, an instruction on measurement items, an input of measured values, an instruction on performing calculations, an instruction on displaying calculated results.

A display screen of the display section 401, when delivering an electronic work instruction, may display a three-dimensional image and have various functions as follows:
1. Zoom display of an area specified by a user;
2. Perspective display of an area specified by a user;
3. Display of a shape of a tool used in a work;
4. Display of a position to be set and a usage of a tool, and how the tool is operated during usage;
5. Animation display of contents of a work for easy understanding;
6. Exaggeration display of a work behavior with exaggerated changes and movements for easy understanding;
7. Display of a work target image as close as possible to a real one making use of existing images;
8. Display of an image when the work is completed; and
9. Display of an image which helps to realize an actual texture of a displayed work target object.

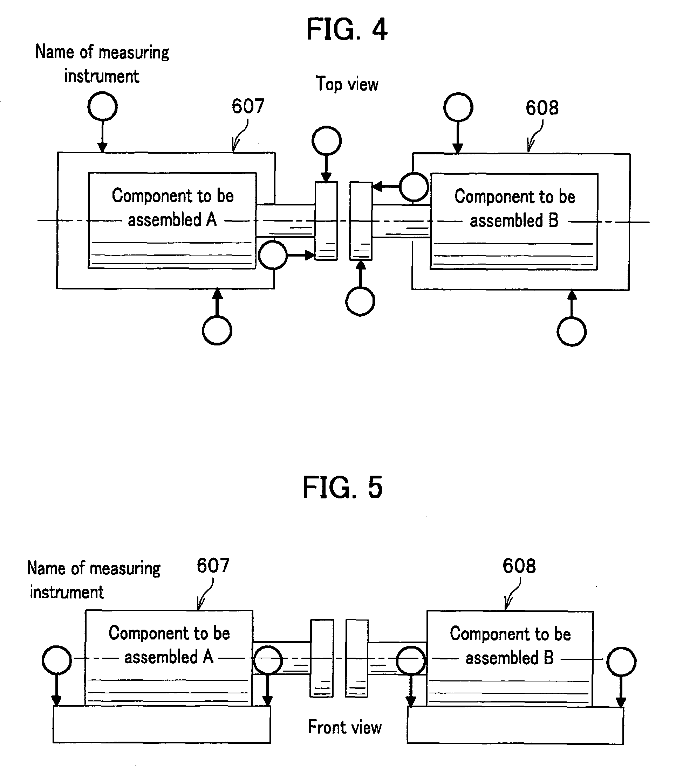

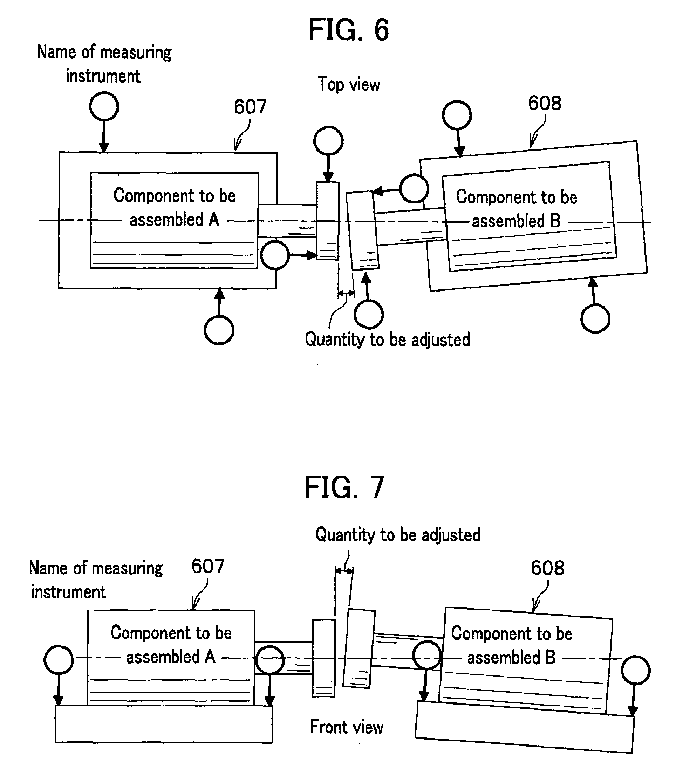

Next is described an example of configuration and arrangement, and positioning in an assembling work. FIG. 4 and FIG. 5 each show a name of a measuring instrument, and information on a position where measurement is made. Also, FIG. 4 and FIG. 5 each show which position of which surface of the components to be assembled A,B are to be adjusted relative to predetermined reference values. Final positioning in the assembly work is described next with reference to FIG. 6 and FIG. 7.

FIG. 6 and FIG. 7 each show an exaggeration display of the work target object images 607,608, which is also shown in the image display area 603 of FIG. 3. FIG. 6 and FIG. 7 each show a name of a measuring instrument, information on a position where measurement is made, and a quantity to be adjusted. Such an exaggeration display and a clear indication of a quantity to be adjusted in FIG. 6 and FIG. 7 ensure a precise alignment.

Next is described an example of steps of a fixing work of respective coupling sections of a pair of shafts. The coupling sections are fixed to each other by components such as nuts and bolts. In such a fixing work, it is necessary to properly adjust weight balance or misalignment of the coupling sections.

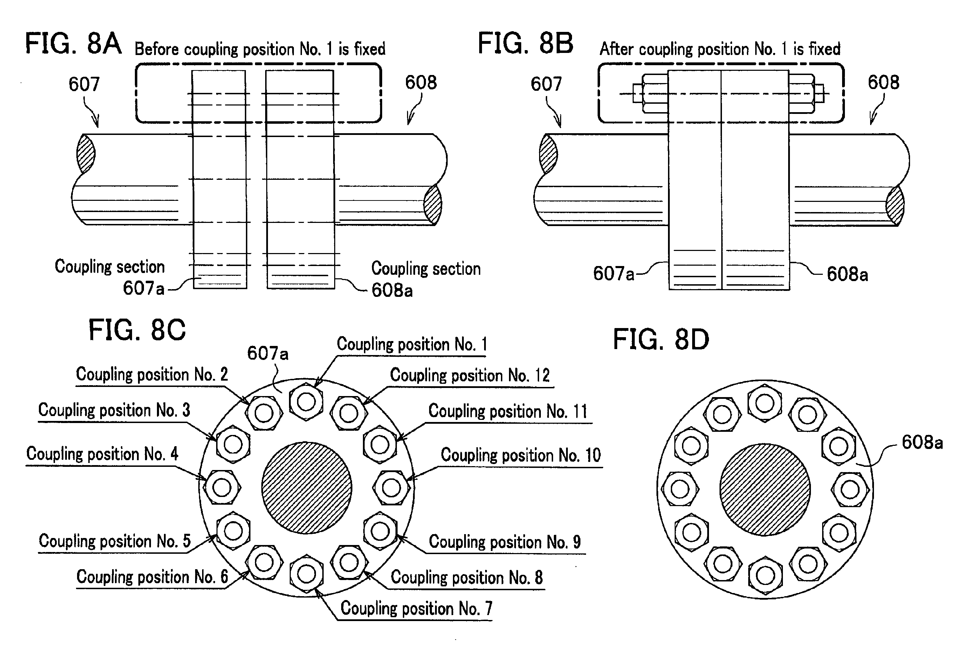

FIG. 8A to FIG. 8D are explanatory views of a fixing work of coupling sections of a pair of work target objects.

FIG. 8A shows an enlarged image of respective coupling sections 607a,608a of the work target object images 607,608 before a coupling position No. 1 is fixed. FIG. 8B shows an enlarged image of the respective coupling sections 607a,608a of the work target object images 607,608 after the coupling position No. 1 is fixed. FIG. 8C and FIG. 8D each show an enlarged image of a front view of the respective coupling sections 607a,608a of the work target object images 607,608. Coupling positions No. 1 to No. 12 are provided on the respective coupling sections 607a,608a.

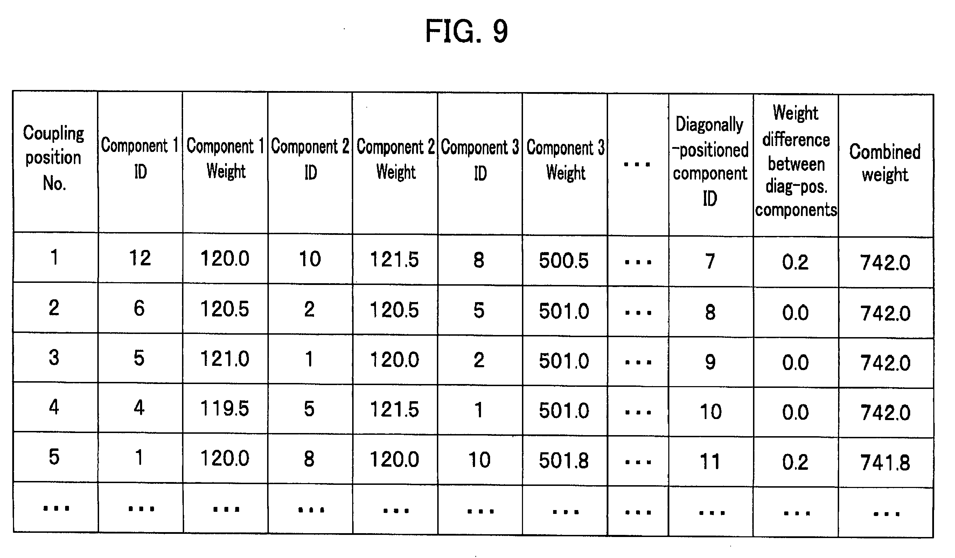

FIG. 9 shows information in the electronic work instruction contents for each coupling position, such as, for example, each ID and weight of components 1, 2 and 3, an ID of a diagonally-positioned component, a weight difference between diagonally-positioned components, and a combined weight of the components 1, 2 and 3. The information is displayed in the image display area 603 (see FIG. 3).

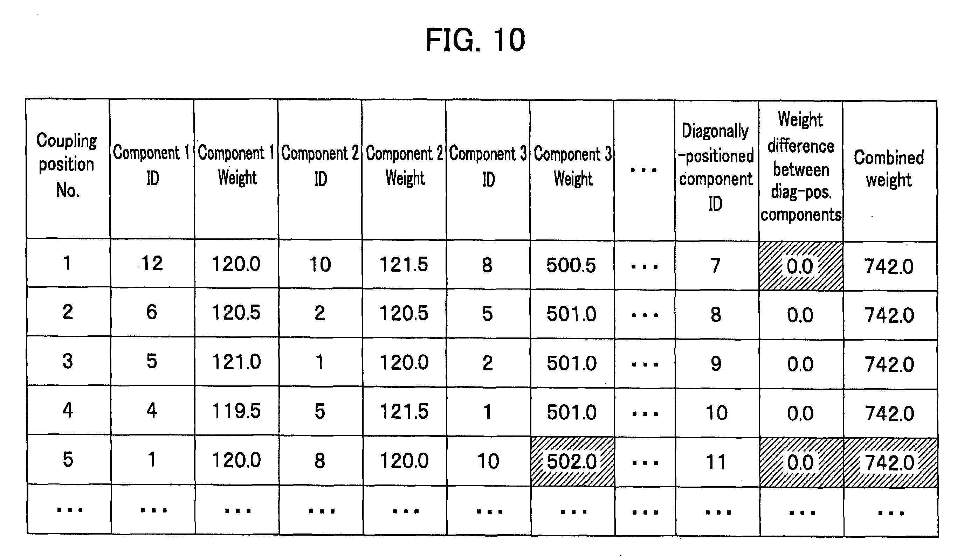

FIG. 10 shows information in the revised electronic work instruction contents for each coupling position, such as, for example, each ID and weight of the component 1, 2 and 3, an ID of a diagonally-positioned component, a weight difference between diagonally-positioned components, and a combined weight of the components 1, 2 and 3. The information is also displayed in the image display area 603.

The information shown in FIG. 9 and included in the electronic work instruction contents before revised is information for an instruction of combining coupling components in the fixing work in which respective coupled sections of a pair of work target objects are fixed. On the other hand, the information shown in FIG. 10 and included in the electronic work instruction contents after revised is information for an instruction of optimally combining the coupling components in the fixing work. The information in hatched cells in FIG. 10 is revised from that in FIG. 9. In FIG. 10, the combined weights are made to have a same value of 742.0. The weight differences between diagonally-positioned components are also made to be zero.

In the embodiment of the present invention, the electronic work instruction contents include information on various work instructions.

As described above, the device of work instruction delivery according to the present invention includes:
the work order skeleton holding section 102 for holding the work order skeleton representing an order of works;
the work procedure explanatory information holding section 103 for holding the work procedure explanatory information representing work procedures according to the order of works;
the electronic work instruction contents creating means (for example, the creation unit 300) for creating and holding the electronic work instruction contents based on the work order skeleton in the work order skeleton holding section 102 and the work procedure explanatory information in the work procedure explanatory information holding section 103;
the display/voice guidance unit 400 for reading out the electronic work instruction contents from the electronic work instruction contents creation means and display an image or produces a voice guidance based on the contents;
the image taking section 502 for taking an image of a state of an actual work performed according to the order of works and creating work state image data from the taken image;
the comparison display means (which may also be specifically referred to as the actual operation monitor comparison section 501 and the monitor 503) for displaying for comparison between the electronic work instruction contents and the work state image data;
the revision information input means (for example, the operational input section 101) for inputting revision information based on the electronic work instruction contents and the work state image data displayed on the comparison display means;
the revision information holding means (for example, the work order skeleton holding section 102 and the work procedure explanatory information holding section 103) for holding the revision information inputted from the revision information input means into the work order skeleton holding means or the work procedure explanatory information holding means; the revised electronic work instruction contents creating means (for example, the creation unit 300) for revising the work order skeleton in the work order skeleton holding means or the work procedure explanatory information in the work procedure explanatory information holding means based on the revision information held in the work order skeleton holding means or the work procedure explanatory information holding means, and for creating and holding the revised electronic work instruction contents; and
the revision display means (for example, the display/voice guidance unit 400) for displaying the revised electronic work instruction contents from the revised electronic work instruction contents creating means.
Therefore, the device of work instruction delivery can revise the work order skeleton and the work procedure explanatory information based on the inputted revision information, and then create and display the electronic work instruction contents. This can solve a possible problem in information on a work instruction found when an actual work is done based on the work instruction.

According to the present invention, in a work process in which similar works are repeatedly performed, it is possible to beforehand estimate and examine an event which is likely to happen in the works even at a time of preparing an order of works. This allows optimal work procedures having the beforehand-examined order and contents of works to be created, eliminating a possible problem from happening. Further, a worker who is to perform a work can practice the optimal work procedures and become familiarized with contents of the works in advance. This enhances efficiency of the works and shortens a lead time from initiation to completion of the works. Additionally, accumulated achievements and know-hows of the works bring about quality improvement of a product produced by the works.

In the embodiment described above, the input unit 100, the control unit 200, and the creation unit 300 are separate and different units. However, the present invention is not limited to this, and one management server may collectively embody the input unit 100, the control unit 200, and the creation unit 300. In the embodiment, only one display/voice guidance unit 400 is provided. However, the present invention is not limited to this, and a plurality of the display/voice guidance units 400 may be preferably but not necessarily provided at each position where a work is performed and may deliver respective electronic work instructions created in the management server via the Internet.

The present invention can solve a possible problem to be found in information on a work instruction when an actual work is done based on the work instruction. The present invention is useful in a device, a method, a program, and a storage medium, of work instruction delivery.

The embodiments according to the present invention have been explained as aforementioned. However, the embodiments of the present invention are not limited to those explanations, and those skilled in the art ascertain the essential characteristics of the present invention and can make the various modifications and variations to the present invention to adapt it to various usages and conditions without departing from the spirit and scope of the claims.

## Claims

1. A device of work instruction delivery for displaying and explaining an order of works and procedures of the works according to the order and for delivering work instructions comprising:
a work order skeleton holding means for holding a work order skeleton representing an order of works;
a work procedure explanatory information holding means for holding work procedure explanatory information representing work procedures according to the order of works;
an electronic work instruction contents creating means for creating and holding electronic work instruction contents based on the work order skeleton held in the work order skeleton holding means and the work procedure explanatory information held in the work procedure explanatory information holding means;
a display means for reading out the electronic work instruction contents from the electronic work instruction contents creation means and display an image based on the contents;
a work state image taking means for taking an image of a state of an actual work performed according to the order of works and creating work state image data from the taken image:
a comparison display means for displaying for comparison between the electronic work instruction contents and the work state image data;
a revision information input means for inputting revision information based on the electronic work instruction contents and the work state image data displayed in the comparison display means;
a revision information holding means for holding revision information inputted from the revision information input means into the work order skeleton holding means or the work procedure explanatory information holding means;
a revised electronic work instruction contents creating means for revising the work order skeleton in the work order skeleton holding means or the work procedure explanatory information in the work procedure explanatory information holding means based on the revision information held in the work order skeleton holding means or the work procedure explanatory information holding means, and for creating and holding revised electronic work instruction contents; and
a revision display means for displaying the revised electronic work instruction contents from the revised electronic work instruction contents creating means.

2. The device of work instruction delivery according to Claim 1, wherein the work procedure explanatory information includes at least any one of 3D CAD data, video data, image data, photographic data, and document data.

3. The device of work instruction delivery according to Claim 1, wherein the display means displays any specific portion in the electronic work instruction contents in a magnified and exaggerated image.

4. A method of work instruction delivery for displaying and explaining an order of works and procedures of the works according to the order and for delivering work instructions comprising:
a work order skeleton holding step in which a work order skeleton holding means holds a work order skeleton representing an order of works;
a work procedure explanatory information holding step in which a work procedure explanatory information holding means holds work procedure explanatory information representing work procedures according to the order of works;
an electronic work instruction contents creating step in which an electronic work instruction contents creating means creates and holds electronic work instruction contents based on the work order skeleton held in the work order skeleton holding means and the work procedure explanatory information held in the work procedure explanatory information holding means;
a display step in which a display means reads out the electronic work instruction contents from the electronic work instruction contents creation means and displays an image based on the contents;
a work state image taking step in which a work state image taking means takes an image of a state of an actual work performed according to the order of works and creates work state image data from the taken image:
a comparison display step in which a comparison display means displays for comparison between the electronic work instruction contents and the work state image data;
a revision information input step in which a revision information input means inputs revision information based on the electronic work instruction contents and the work state image data displayed in the comparison display means;
a revision information holding step in which a revision information holding means holds revision information inputted from the revision information input means into the work order skeleton holding means or the work procedure explanatory information holding means;
a revised electronic work instruction contents creating step in which a revised electronic work instruction contents creating means revises the work order skeleton in the work order skeleton holding means or the work procedure explanatory information in the work procedure explanatory information holding means based on the revision information held in the work order skeleton holding means or the work procedure explanatory information holding means, and creates and holds revised electronic work instruction contents; and
a revision display step in which a revision display means displays the revised electronic work instruction contents from the revised electronic work instruction contents creating means.

5. The method of work instruction delivery according to Claim 4, wherein the work procedure explanatory information includes at least any one of 3D CAD data, video data, image data, photographic data, and document data.

6. The method of work instruction delivery according to Claim 4, wherein the display means displays any specific portion in the electronic work instruction contents in a magnified and exaggerated image.

7. A program of work instruction delivery, the program making a computer execute the method of work instruction delivery according to any one of Claims 4 to 6.

8. A storage medium of work instruction delivery, the storage medium storing the program of work instruction delivery according to Claim 7.
